# NEUE EUROPÄISCHE PATENTSCHRIFT

(11) **EP 3 072 668 B2**
(45) Veröffentlichungstag und Bekanntmachung des Hinweises auf die Entscheidung über den Einspruch: **11.12.2024**
(45) Hinweis auf die Patenterteilung: 09.05.2018
(21) Anmeldenummer: 16160542.3
(22) Anmeldetag: 15.03.2016
(51) Int. Cl.: B29C 65/20, B23C 3/30, B29C 65/78, B29C 65/00, E06B 3/96, B29L 31/00

(54) **VERFAHREN UND VORRICHTUNG ZUM VERBINDEN VON PROFILSTÜCKEN**
METHOD AND DEVICE FOR CONNECTING PROFILE SECTIONS
PROCEDE ET DISPOSITIF DE RACCORDEMENT DE PIECES PROFILEES

(30) Priorität: 24.03.2015 DE 102015104446
(43) Veröffentlichungstag der Anmeldung: 28.09.2016
(73) Patentinhaber: Urban GmbH & Co. Maschinenbau KG, 87700 Memmingen (DE)
(72) Erfinder: Hiebeler, Stefan, 87463 Dietmannsried (DE)
(74) Vertreter: Patentanwälte Olbricht, Buchhold, Keulertz Partnerschaft mbB

(56) Entgegenhaltungen:
- EP-A1- 0 885 713
- WO-A1-2014/122572
- WO-A1-2016/064357
- DE-A1- 3 039 733
- "DVS 2207-25: Schweissen von thermoplastischen Kunststoffen. Heizelementstumpfschweissen. Schweissen von Fernsterprofilen aus PVC-U = Welding of thermoplastics - Heated tool butt welding - Welding of casements sections made from PVC-U", DVS (DEUTSCHER VERBAND FÜR SCHWEISSTECHNIK) RICHTLINIE,, vol. 2207-25, 1 October 1989 (1989-10-01), pages 1 - 7, XP009179926

## Beschreibung

Die Erfindung betrifft ein Verfahren zum Verbinden von in einem Winkel aufeinanderstoßende Profilstücke, insbesondere Kunststoff-Profilstücke zu einem geschweißten Rahmen oder Teilrahmen, insbesondere eines Fenster- oder Türrahmens.

Der Einsatz von Kunststoffprofilen für die Herstellung von Fenster oder Türen ist im Stande Technik hinlänglich bekannt. Das gattungsgemäße Verfahren zum Verbinden ist ein Teil eines Herstellungsverfahrens für solche Fenster oder Türen.

Im Stand der Technik wird wie folgt vorgegangen:
Zunächst werden die Profilstäbe auf Maß und Gehrung gesägt, hierbei wird eine gewisse Toleranz in Länge und Winkellage der Gehrung akzeptiert bzw. berücksichtigt.

Die Profilstäbe werden dann in eine Schweißmaschine eingelegt, um die benachbart positionierten Profilstäbe in den Ecken, an den Gehrungs- oder Verbindungsflächen, die unter einem Winkel, üblicherweise ein rechter Winkel (ohne aber die Erfindung oder den Stand der Technik hierauf zu beschränken) aneinanderstoßen, zu verschweißen. Für den Schweißvorgang wird üblicherweise das thermoplastische Verhalten des Kunststoffmaterials des Profils genützt. Hierbei ist darauf zu achten, dass die eingangs akzeptierte Längentoleranz so gewählt ist, dass einerseits eine stabile Verschweißung entsteht, auf der anderen Seite aber nicht zu viel Material vorhanden ist, das abgeschmolzen, (oder abgebrannt) werden muss und dann zu einem störenden Schweißwulst führt.

Im nächsten Schritt wird der fertig verschweißte Rahmen oder Teilrahmen in eine so genannte Verputzmaschine eingelegt, in welcher die Eckverbindung, die Gehrungsfläche oder Gehrungslinie (das ist die an der Eckverbindung umlaufende Verbindungslinie der beiden aneinanderstoßenden Profile), endbearbeitet wird. Im Wesentlichen geht es dabei darum, den Schweißwulst abzuarbeiten, der zum einen das optische Erscheinungsbild zum anderen aber auch die Funktion des Fensters (wenn sich der Schweißwulst zum Beispiel in einer Aufnahmenut für ein Dichtungsprofil oder dergleichen befindet) beeinträchtigt.

Im Stand der Technik sind inzwischen auch Profile bekannt, die einen abgerundeten äußeren Profilverlauf (im Querschnitt) aufweisen. Das Abstechen oder Entfernen des Schweißwulstes gerade in diesem gerundeten Bereich ist aufwändig. Dabei muss auch beachtet werden, dass beim Verputzen, also dem Entfernen eines Schweißwulstes nicht eine auf das Kunststoffprofil aufkaschierte Folie, die zum Beispiel ein Holzdekor zeigt, beschädigt wird.

Das Dokument WO 2014/122572 A1 offenbart ein Verfahren zum Verschweißen von Profilelementen aus Plastikmaterial. Das Dokument DE 303 97 33 A1 offenbart ein Verfahren zum Stumpfverschweißen von thermoplastischen Kunststoff-Hohlprofilstäben und eine Vorrichtung zu dessen Durchführung.

Die Erfindung hat es sich daher zur Aufgabe gemacht, den vorbeschriebenen Stand der Technik zu verbessern.

Zur Lösung dieser Aufgabe geht die Erfindung aus von einem Verfahren wie eingangs beschrieben und schlägt vor, dass das Verfahren folgende Schritte in angegebener Reihenfolge umfasst:
(i) Aufspannen der Profilstücke,
(ii) Ausgleich von mindestens einer Toleranz in mindestens einer sich senkrecht zu einer Rahmenebene erstreckenden Verbindungsfläche der Profilstücke durch ein Abtrennen von Profilmaterial im Bereich der Verbindungsflächen mit wenigstens einem Bearbeitungswerkzeug,
(iii) Anschmelzen der Verbindungsflächen und Kontaktieren der angeschmolzenen Verbindungsflächen zur Ausbildung einer Schweißverbindung, wobei
   als Bearbeitungswerkzeug ein Fräswerkzeug vorgesehen ist, welches aus zwei Frässcheiben gebildet ist, die symmetrisch, gegensinnig zueinander ausgerichtet sind und als Stirnplanfräser realisiert sind, wobei die beiden Frässcheiben von einem Distanzstück beabstandet sind, wobei das Fräswerkzeug als Doppelfräser ausgeführt ist und gleichzeitig beide Enden von zwei eingelegten Profilstücken bearbeitet, wobei ein Riemenantrieb an dem Distanzstück angreift.

Der Pfiff der Erfindung liegt darin, dass erkannt worden ist, dass eine optimale Vorbereitung der Gehrungs- bzw. Verbindungsflächen, am besten kurz bevor die Profilstücke miteinander verschweißt werden, die Ausbildung eines Schweißwulstes minimieren, wenn nicht sogar vermeidet. Günstiger Weise wird dabei die bei der Herstellung sowieso vorgesehene Maßgenauigkeit bzw. Maßhaltigkeit (der fertige Rahmen bzw. Teilrahmen muss ja ein zutreffendes richtiges Endmaß aufweisen) verwendet. Das heißt die Position der Heizspiegel, die für ein Verschweißen der Profilstäbe vorgesehen sind, sind positionsgenau angeordnet, was durch eine entsprechende Einstellbarkeit der Maschine erfolgt. Für das Verschweißen werden die Profilstäbe aufgespannt. Sie liegen dann bereits in der richtigen Position und, bevor tatsächlich das Anschmelzen und Verschweißen erfolgt, wird der Bearbeitungsschritt, wie beschrieben, ausgeführt, um so die Toleranzen auszugleichen bzw. zu reduzieren.

Der erfindungsgemäße Vorschlag umfasst dabei ein Verfahren mit der exakten Abfolge der beschriebenen Schritte. Schritt (iii) erfolgt nach Schritt (i), da dann ein zuverlässiges Verbinden d.h. Verschweißen der Profilstücke ein Aufspannen der Profilstücke bedingt.

Als auszugleichende (bzw. zu reduzierende) Toleranz wird hierbei zunächst die Längentoleranz des Profilstabes angesehen. Unter dem Ausgleich von mindestens einer Längentoleranz in mindestens einer sich senkrecht zu einer Rahmenebene erstreckenden Verbindungsfläche der Profilstücke ist dabei der Abstand der das Profilstück begrenzenden Verbindungsflächen voneinander zu verstehen. Ein zu großzügig abgesägter Profilstab führte im Stand der Technik zu einem erheblichen Abschmelzen oder Abbrand und daher zur Ausbildung eines großen, voluminösen Schweißwulstes, der entsprechend zu entfernen war. Wird das Längenmaß auf ein optimiertes Toleranzmaß eingeengt, was durch den spanabhebenden Bearbeitungsschritt gemäß der Erfindung erfolgt, kann bei dem nachfolgenden Verschweißen, mangels Materials, kein größerer Schweißwulst (wenn überhaupt noch) entstehen.

Der erfindungsgemäße Vorschlag beschränkt sich aber nicht nur auf die Längentoleranz, sondern betrifft in gleicher Weise auch die Toleranz der Winkellage (Winkellagetoleranz)der Verbindungsfläche/n bzw. der Gehrungsfläche/n. Denn eine schräg abgeschnittene Gehrungsfläche führt ebenfalls zur einen Materialüberstand, der, ähnlich wie bei einem zu großzügig abgesägten Profilstab, beim Verbinden abgebrannt werden musste. Dabei ist die Lage der Gehrungsfläche im fertigen Rahmen bzw. Teilrahmen exakt definierbar: Die Verbindungsfläche bzw. Gehrungsfläche steht senkrecht auf der Rahmenebene und schließt üblicherweise mit der Längserstreckung der anschließenden Profilstäbe den halben Eckwinkel ein. Die Rahmenebene ist ihrerseits durch die Profilstäbe definiert, die, je für sich allein gesehen, zumindest eine Längserstreckung definieren und, winklig zueinander angeordnet, zwischen sich eine Ebene, die Rahmenebene, aufspannen. Ein großer Vorteil des erfindungsgemäßen Verfahrens ist dabei, dass durch den zerspanenden Bearbeitungsschritt geschickter Weise beide Toleranzen in einem Schritt ausgeglichen werden!

Erfindungsgemäß erfolgt das maßgenaue Ausgleichen in der Aufspannposition der Profilstäbe, wie sie auch für das Verschweißen hernach verwendet wird. Man spart sich zum einen ein Umspannen des Profilstabes und damit Rüstzeit. Zum anderen gewährleistet eine solche Variante, dass die hintereinander ablaufenden Bearbeitungsschritte, von ihrer Positionierung her, optimiert durchgeführt werden können und somit die Maßgenauigkeit hoch ist und daher die Toleranzen so eng ausgeglichen werden können, um die Ausbildung einer Schweißverbindung auf ein für die Herstellung einer effektiven Verbindung optimiertes Maß zu reduzieren. Idealerweise wird sich dann auch nur ein vernachlässigbarer oder kein Schweißwulst ausbilden.

Als Bearbeitungswerkzeug für das Abtrennen von Profilmaterial von dem Profilstück sind verschiedene Vorgehensweisen oder Verfahren bzw. Typen vom Bearbeitungswerkzeugen nach der Erfindung vorgesehen. Dies können zum Beispiel Späne erzeugende Bearbeitungswerkzeuge sein, es ist aber auch möglich, für diese Bearbeitung zum Beispiel ein Laser- oder Wasserstrahlschneider als Bearbeitungswerkzeug einzusetzen. Die letztgenannten Bearbeitungsverfahren (Laser- bzw. Wasserstrahlschneider) haben den Vorteil, dass keine Späne erzeugt werden, sondern größere Abschnitte, die bei dem nachfolgendem Verschweißvorgang weniger Probleme bereiten können.

Als Späne erzeugendes Bearbeitungswerkzeug wird hierbei zum Beispiel ein Fräser oder ein Fräswerkzeug allgemein verstanden, ohne aber das Bearbeitungswerkzeug nach der Erfindung auf dieses spezielle Werkzeug zu reduzieren. Es sind sowohl Bearbeitungswerkzeuge mit definierten oder bestimmten Schneiden, wie auch mit unbestimmten Schneiden gemäß dem erfindungsgemäßen Ansatz einsetzbar. Die Maßgenauigkeit resultiert letztendlich auf die spezielle Ausgestaltung des Werkzeuges und ist daher beherrschbar. Das Spanende abtragen erfolgt dabei daher zum Beispiel durch ein Fräsen, Hobeln, Schleifen oder ähnlichem.

Die erfindungsgemäße Aufgabe wird auch durch eine Bearbeitungsmaschine zum Verbinden von in einem Winkel aufeinanderstoßenden Profilstücken, insbesondere Kunststoff-Profilstücke zu geschweißten Rahmen oder Teilrahmen, insbesondere Fenster- oder Türrahmen gelöst, welches sich insbesondere dadurch auszeichnet, dass ein Profilmaterial abtrennendes Bearbeitungswerkzeug, vorgesehen ist, das wenigstens einen, eine zu einer Verbindungsfläche parallel ausgerichtete Bearbeitungsfläche aufweist und für ein mindestens teilflächiges, insbesondere vollflächiges Abtrennen von Profilmaterial an der Verbindungsfläche vorgesehen ist, wobei die Bearbeitungsmaschine dafür vorgesehen ist, das erfindungsgemäße Verfahren auszuführen. Als Bearbeitungswerkzeug ist ein Fräswerkzeug vorgesehen, welches aus zwei Frässcheiben gebildet ist, die symmetrisch, gegensinnig zueinander ausgerichtet sind und als Stirnplanfräser realisiert sind, wobei die beiden Frässcheiben von einem Distanzstück beabstandet sind, wobei das Fräswerkzeug als Doppelfräser ausgeführt ist und gleichzeitig beide Enden von zwei eingelegten Profilstücken bearbeitet, wobei ein Riemenantrieb an dem Distanzstück angreift.

Von Bedeutung ist hierbei insbesondere, dass der spanende Bearbeitungsschritt, welcher durch das Bearbeitungswerkzeug ausgeführt wird, in einer Bearbeitungsmaschine, die eigentlich zum

Verbinden von Profilstücke, insbesondere Kunststoffprofilstücke vorgesehen ist, ausgeführt wird.

Dabei ist auch vorgesehen, dass die Bearbeitungsmaschine gemäß dem Vorschlag, Teil einer Bearbeitungsanlage ist, die zur Herstellung von Fensterrahmen oder -Teilrahmen dient. Dabei ist vorgesehen, dass der die Toleranz eliminierende Bearbeitungsschritt kurz vor dem Verschweißen der Profilstücke erfolgt, wobei der Toleranz eliminierende Schritt (Abtrennen von Profilmaterial) in einer eigenen Bearbeitungsmaschine, oder zusammen mit dem Verschweißen der Profilstücke zu Rahmen bzw. Rahmenteile vorgesehen ist.

Des Weiteren ist in dem Vorschlag vorteilhafter Weise vorgesehen, dass eine Längenmessung zur Ermittlung der Längentoleranz der Profilstücke vor oder nach dem Aufspannen zur Ermittlung eines IST-Wertes für die Länge vorgesehen ist. Die Längentoleranz ergibt sich aus einem Vergleich des tatsächlich gemessenen IST- Wertes der Länge im Vergleich mit den Verarbeitungsparametern bzw. dem Auftrag, da die eigentliche Profillänge ein sprechendes Übermaß für die Ausbildung der Schweißverbindung zu berücksichtigen hat.

Bei einer bevorzugten Ausgestaltung des Vorschlags ist vorgesehen, dass insbesondere basierend auf dem Messergebnis, eine Positionierung oder Zentrierung der Profilstücke relativ zu dem wenigstens einen Bearbeitungswerkzeug erfolgt.

Die Erfindung umfasst mindestens zwei Varianten, wie die Längentoleranz ausgeglichen werden kann:
In einer ersten Variante wird mithilfe einer separat vorgesehenen Längenmessung die tatsächliche IST-Länge des Profilstückes bestimmt und in geeigneter Weise auch gespeichert. Diese IST-Länge wird dann mit der SOLL-Länge/ SOLL-Wert (datentechnisch, zum Beispiel in der Steuerung) verglichen und hieraus ergibt sich ein durch das Bearbeitungswerkzeug abzutragendes Übermaß, dass geschickter Weise auf die beiden Enden des Profilstückes aufgeteilt wird, wodurch dann eine beidseitige Bearbeitung der Verbindungsfläche bzw. Gehrungsfläche erfolgt, die dann auch zu einer winkelrichtigen Anordnung der Verbindungsfläche führt. Das abzuarbeitende Übermaß wird dann zum Beispiel an einer Anzeige angezeigt und der Profilstab ist dann auf das angezeigte Maß zu positionieren und zu spannen, wobei dies zum Beispiel händisch, durch den Bediener oder auch automatisch erfolgen kann. Eine solche Vorgehensweise ist insbesondere dann zu empfehlen, wenn in einer verhältnismäßig einfachen Bearbeitungsmaschine nur eine Eckverbindung auf einmal bearbeitet werden kann. Eine solche Bearbeitungsmaschine wird auch als Ein-Kopf-Maschine bezeichnet.

In so genannten Mehr-Kopf-Maschinen, diese umfassen zum Beispiel zwei oder vier Bearbeitungsköpfe, werden in einem Bearbeitungsschritt mehrere Ecken in gleicher Weise bearbeitet. Dies hat entsprechende Geschwindigkeitsvorteile und auch den Vorteil, dass die Bearbeitungsköpfe (im wesentlichen bestehend aus einer Spannvorrichtung, dem Heizspiegel und dem Bearbeitungswerkzeug) mit entsprechenden Wegemesssystemen (Längenmesssysteme) und Antrieben ausgestattet sind, die ein maßgenaues Positionieren der Bearbeitungsköpfe an dem Bearbeitungsmaß erlaubt. Günstigerweise sind die Bearbeitungsköpfe dabei an der Verbindungsfläche zu positionieren und ein Profilstab, der zwischen zwei benachbarten Bearbeitungsköpfe eingelegt wird, die auf dem richtigen Bearbeitungsmaß stehen, kann problemlos zwischen diesen beiden Bearbeitungsköpfe zentriert werden.

Des Weiteren ist vorgesehen, dass ein Vergleich des Messergebnisses (IST-Wert) mit einem SOLL-Wert erfolgt und bei Über-oder Unterschreiten eines Toleranzbereiches ein/e
- Abbrechen des Ablaufes,
- Informationsausgabe an einer Anzeige
- Eingabeaufforderung an den Bediener und/oder
- Verwerfen des Profilstückes erfolgt.

Eine solche Verfahrensweise sichert zum einen eine hohe Bearbeitungsqualität, weil nur entsprechend bestätigte oder im Toleranzbereich liegende Profile verwendet werden. Darüber hinaus ist es möglich durch diese Datenerfassung auch eine Dokumentation über die erstellten Verschweißungen, oder auch Rahmen zu erstellen. Dies dient zum einen der Verbesserung der Bearbeitungseffizienz wie auch der Verbesserung der Bearbeitungsqualität. Geschickter Weise werden die Informationen über die Messwerte, insbesondere korreliert zu den jeweiligen Bearbeitungsdaten, in einer Datenbank für vorgenannte Auswertungszwecke gesammelt und gespeichert.

Geschickter Weise ist vorgesehen, dass eine Bestimmung der Winkellage der Verbindungsflächen relativ zu der Rahmenebene und ein Ausgleich von Toleranzen durch Bearbeiten der Verbindungsflächen mit dem wenigstens einem Bearbeitungswerkzeug erfolgt. Wie bereits ausgeführt ist die Rahmenebene durch die beiden Profilstäbe definiert. Insofern kann die Winkellage hierzu unmittelbar ermittelt werden. Die Winkellage kann aber auch mittelbar, über Ebenen, die die Bearbeitungsmaschine vorgibt, bestimmt werden. Es bieten sich dabei zum Beispiel die Ebene an, die durch die Auflageflächen angegeben ist, auf die die Profile aufgelegt und aufgespannt werden. Im Idealfall ist die so definierte Bearbeitungsebene parallel zur Rahmenebene. Von der Bearbeitungsebene ist dann die Arbeitsebene, innerhalb der entsprechende Bearbeitungen stattfinden, zu unterscheiden. Diese Arbeitsebenen sind zum Beispiel durch die Orientierung des Heizspiegels oder des Bearbeitungswerkzeuges angegeben.

Das erfindungsgemäße Vorgehen ist daher nicht nur über den Ausgleich der (Längen-) Toleranz möglich, sondern kann in gleicher Weise auch durch eine Korrektur/Ausgleich der Toleranz in der Winkellage der Verbindungsfläche erfolgen. Beide Varianten gehören zur Erfindung.

Die Winkeltoleranz wird üblicherweise automatisch eliminiert, das heißt in Ordnung gebracht, wenn das Profilstück aufgespannt ist und auf das richtige Längenmaß bearbeitet wird. Die Anordnung ist nämlich so getroffen, das die von dem das Bearbeitungswerkzeug erzeugte Bearbeitungsfläche idealerweise parallel ist zu der Fläche des die Verbindung herstellenden Heizspiegels und so ein mechanisch optimaler Verbund bei minimal abgebranntem von Kunststoffmaterial möglich ist.

Des Weiteren ist in dem Vorschlag vorteilhafter Weise vorgesehen, dass der Schritt (ii) unmittelbar vor Schritt (iii) erfolgt, insbesondere kein Umspannen der Profilstücke zwischen Schritt (ii) und Schritt (iii) vorgesehen ist. Eine solche Prozessführung ist effektiv, da keine zusätzlichen Rüstzeiten für ein nochmaliges Spannen anfallen. Sie ermöglicht auch eine hochgenaue Bearbeitung, da das Bearbeitungswerkzeug wie auch der Heizspiegel exakt in der Bearbeitungsfläche geführt werden und dieser geometrische Zusammenhang zwischen dem materialabtrennenden Verfahrensschritt und dem Verschweißen nicht aufgelöst wird.

In einer weiteren bevorzugten Ausführungsform ist vorgesehen, dass das Verfahren einen Schritt der Fixierung des Profilstückes aufweist, wobei die Fixierung vor oder nach der Zentrierung und/oder Längenmessung vorgesehen ist. Das Fixieren, also das Spannen des Profilstückes kann zu unterschiedlichen Zeitpunkten erfolgen, was die hohe Variabilität dieses Vorschlages unterstreicht.

Des Weiteren ist günstiger Weise vorgesehen, dass ein voll- oder nur teilflächiges spanendes Abtragen der Verbindungsfläche/n vorgesehen ist. Ein nur teilflächiges spanendes Abtragen der Verbindungsfläche (bzw. eines Bereiches an der Verbindungsfläche) bietet sich dann an, wenn das eingesetzte Bearbeitungswerkzeug eine Bearbeitungslänge zur Verfügung stellt, die kleiner ist wie die Höhe oder eine andere Dimension der Querschnittsfläche bzw. Gehrungsfläche des Profils. Eine solche Ausgestaltung des Bearbeitungswerkzeuges führt unter Umständen dazu, dass die Gehrungsfläche mehrfach mit dem Bearbeitungswerkzeug, jeweils an anderen Positionen, bearbeitet werden muss. Diese zusätzlichen Bearbeitungswege am Profil können aber auch dazu genutzt werden, an dem Profil weitere spanende Bearbeitungen vorzunehmen, wie das noch weiter unten geschildert wird.

Wird ein verhältnismäßig großes Bearbeitungswerkzeug eingesetzt, so ist es möglich, die Verbindungsfläche in nur einem Bearbeitungsschritt fertig zu bearbeiten.

Vorteilhafter Weise ist vorgesehen, dass nur an den aussenliegenden Profilbereichen, insbesondere die das Profil begrenzenden Profilstege, ein Abtrennen der Verbindungsfläche/n vorgesehen ist. Es ist klar, dass bei diesem Vorschlag kein vollflächiges Abtragen erfolgt, sondern nur entsprechende Teile der Verbindungsfläche abgetragen werden. Diesem Vorschlag liegt die Erkenntnis zu Grunde, dass hierdurch die Ausbildung eines optisch störenden, außenliegender Schweißwulst vermieden/reduziert wird und sich gleichzeitig im inneren Bereich ein Schweißwulst durchaus bilden kann, dieser aber nicht stört, weil er im Inneren des Profiles bzw. Rahmens, und somit außen nicht sichtbar, ist. Dies hat den Vorteil, dass im inneren Bereich ein größeres Materialvolumen für die Verschmelzung bzw. Verschweißung zur Verfügung steht und somit insgesamt eine stabilere Verbindung der beiden zu verschweißenden Profilelementen resultiert bei gleichzeitig geringster, minimalster oder sogar ohne der Ausbildung eines Schweißwulstes. Es ist klar, dass hier die gesamte Profilstegbreite der außenliegenden Profilstege auf die akzeptable Toleranz abgetragen wird.

Des Weiteren ist in dem Vorschlag vorteilhafter Weise vorgesehen, dass in Schritt (i) die Profilstücke wenigstens entlang einer parallel zur Rahmenebene verlaufenden ersten Achse (X) und/oder einer hierzu senkrechten, ebenfalls in der Rahmenebene verlaufenden zweiten Achse (Y) verfahren werden.

Bei einer bevorzugten Ausgestaltung des Vorschlags ist vorgesehen, dass eine einstellbare Vorschubgeschwindigkeit und/oder der Vorschubweg der Profilstücke vorgesehen ist.

Des Weiteren ist vorgesehen, dass in Schritt (ii) gleichzeitig ein Ausgleich von Toleranzen bezüglich der Länge der Profilstücke und der Winkellage der Verbindungsflächen durchgeführt wird.

In einer vorteilhaften Ausgestaltung ist vorgesehen, dass Schritt (ii) mehrfach, insbesondere bis zum Erreichen des wenigstens einen SOLL-Wertes innerhalb der Toleranz durchgeführt wird. Hierdurch ist es möglich Profilstäbe, die ein erhebliches Übermaß aufweisen, und die üblicherweise nach einer Bearbeitung mit dem Bearbeitungswerkzeug (zum Beispiel einem Fräswerkzeug) noch nicht im Toleranzbereich um den IST-Wert sind, einer Verarbeitung zuzuführen.

Geschickter Weise ist vorgesehen, dass die Länge des Profilstückes insbesondere über ein Wegmesssystem ermittelt wird.

Geschickterweise wird die Länge der Profilstücke vor dem Ausgleichen der Toleranz ermittelt. Gleichwertiges, äquivalentes kann auch dadurch erreicht werden, dass das Profilstück gespannt, gegebenenfalls auch zentriert gespannt wird, weil dann die Lage des/der Bearbeitungswerkzeuge/es bzw. Heizspiegel/s, die auf dem richtigen Maß positioniert sind, die richtige Länge und richtige Winkellage vorgegeben und so bei dem materialabtrennenden Verfahrensschritt die Toleranzen eliminieren und dann an der gleichen Position die Verschweißung durchgeführt wird.

Das Ermitteln der Länge mithilfe des Wegmesssystems oder auch das Zentrieren des noch nicht bearbeiteten Profilstabes in der Bearbeitungsmaschine passiert dabei geschickterweise vor dem Spannen. Es ist aber auch möglich, zunächst das Profilstück zu spannen, dann die Länge zu ermitteln, dann aufgrund dieser Information das oder die Bearbeitungswerkzeug/e zu positionieren und dann die materialabtrennende Bearbeitung durchzuführen.

All diese vorbeschriebenen Varianten gehören zu dem erfindungsgemäßen Vorschlag.

In einer weiteren bevorzugten Ausführungsform ist vorgesehen, dass die Winkellage der Verbindungsfläche relativ zur Rahmenebene durch ein Winkelmesssystem ermittelt wird.

Des Weiteren ist günstiger Weise vorgesehen, dass in oder vor Schritt (ii) eine Ausrichtung der Position der Profilstücke zueinander durchgeführt wird. Hierunter wird unter anderem auch verstanden, dass die Aufspannlage des Profils vor der Bearbeitung nochmals überprüft wird. Es kann passieren, dass die Profile verkantet, oder um deren Längsachse verdreht (weil zum Beispiel falsch eingelegt) gespannt werden und dann die seitlichen Mantelflächen der zu verschweißenden Profile nicht zusammentreffen. Eine entsprechende Überprüfung kann mit Schaltern, optisch (Lichtschranke) oder durch eine komplexere Bildaufbereitung und Auswertung erfolgen. Wird eine entsprechende Fehllage festgestellt, unterbricht die Steuerung die weitere Bearbeitung und verlangt eine Neuausrichtung der Position der Profilstücke, die zum Beispiel über eine Anzeige dem Bediener mitgeteilt wird, und der dann die Profilstäbe händisch neu einlegt. Bei automatisch laufenden Maschinen kann im Steuerungsablauf vorgesehen sein, dass die Profile automatisch nochmals entnommen und neu eingelegt werden.

Vorteilhafter Weise ist vorgesehen, dass in oder vor Schritt (ii) ein deckungsgleiches Fügen der Stirnflächen (Verbindungsflächen) zulassende Ausrichtung der Profilstücke durchgeführt wird.

Der Kern der Erfindung richtet die beiden Profilstücke nach der durch die Profilstücke definierten Rahmenebene aus. Theoretisch ist es aber auch möglich, dass die Profilstücke eine richtig gesägte Verbindungsfläche aufweisen und man die Profilstücke hieran ausrichtet.

Des Weiteren ist in dem Vorschlag vorteilhafter Weise vorgesehen, dass ein Verschieben des Bearbeitungswerkzeuges entlang einer relativ zur Bearbeitungsebene parallelen, senkrechten oder geneigt ausgerichteten Achse erfolgt.

Die Bearbeitungsebene bestimmt sich durch die Bearbeitungsmaschine und der Ebene, in welcher die Rahmenteile aufgespannt werden, natürlich wird angestrebt, dass die Rahmenebene parallel mit der Bearbeitungsebene ist.

Bei einer bevorzugten Ausgestaltung des Vorschlags ist vorgesehen, dass in Schritt (iii) das Heranführen eines Heizspiegels an die Verbindungsflächen durch Verschieben des Heizspiegels entlang einer zur Bearbeitungsebene parallel, senkrecht oder geneigt ausgerichteten Achse erfolgt.

Des Weiteren ist vorgesehen, dass das Verschieben des Bearbeitungswerkzeuges und/oder des Heizspiegels in einer Ebene parallel zur der Rahmenebene, von oberhalb oder unterhalb der Rahmenebene her erfolgt.

In einer vorteilhaften Ausgestaltung ist vorgesehen, dass bei Festlegung und Ausgleich der Toleranzen die abgetragene Materialmenge derart gewählt ist, dass bei höchstmöglicher Stabilität der Schweißverbindung ein geringstmöglicher Abbrand erreicht wird und eine Ausbildung einer insbesondere sichtbaren Schweißwulst an den Verbindungsflächen bzw. in der Rahmenebene vermieden oder minimiert wird.

Geschickter Weise ist vorgesehen, dass eine Absaugung des abgetrennten Profilmaterials, z.B. der Späne vorgesehen ist, wobei die Absaugung insbesondere über oder durch das Bearbeitungswerkzeug erfolgt. Die Absaugung erfolgt dabei geschickterweise während der materialabrennenden Bearbeitung, oder danach, bevorzugt vor dem Verschweißen der Profilstücke, damit die abgetrennten Materialreste, zum Beispiel die Späne, das Verschweißen nicht beeinträchtigen. Hierbei ist insbesondere vorgesehen, dass das rotativ umlaufende Bearbeitungswerkzeug in geeigneter Weise einen Windstrom oder einen Sog entwickelt, der die Späne von der Verbindungsfläche weg auf einen kontrollierten Weg abführt. Daneben ist es natürlich auch möglich, dass eine entsprechend dimensionierte Sauganlage vorgesehen ist, die einen entsprechenden Unterdruck am Ort der Zerspanung erzeugt und so die Späne entfernt. Durch eine solche Ausgestaltung wird es möglich, diese Bearbeitung neben dem Verschweißen auszuführen und somit letztendlich in einer Bearbeitungsmaschine zwei sich normalerweise ausschließende Bearbeitungsschritte durchzuführen.

Alternativ ist es aber auch vorgesehen, dass die Schritte (ii) und (iii) in gesonderten Vorrichtungen und/oder räumlich getrennt durchgeführt werden, insbesondere um Kontaminationen des Schweißvorganges mit abgehobenen Spänen zu minimieren.

In einer weiteren bevorzugten Ausführungsform ist vorgesehen, dass vor oder nach Schritt (ii) eine Aufnahmenut des Profilstückes mit einem Späne erzeugenden Bearbeitungswerkzeug bearbeitet wird. Die Aufnahmenut erstreckt sich dabei in Längsrichtung des Profilstückes und dient zum Beispiel der Aufnahme einer Dichtung, eines Beschlages oder ähnlichem. Nach dem Verschweißen kann es passieren, dass die Aufnahmenut mit geschmolzenen Kunststoffmaterial verfüllt ist, weswegen es günstig ist hier speziell vorzuarbeiten. Das hier vorgeschlagene Bearbeitungswerkzeug ist zum Beispiel mit dem für die Bearbeitung der Verbindungsfläche vorgesehenen Bearbeitungswerkzeug kombiniert, wobei für die Verbindungsfläche zum Beispiel ein Stirnplanfräser und für die Aufnahmenut ein Fingerfräser vorgesehen ist. Da ein solches kombiniertes Bearbeitungswerkzeug in der Arbeitsebene beweglich, also angetrieben und gesteuert positionierbar ist, können die verschiedenen Bearbeitungsaufgaben durch eine entsprechende Ablaufsteuerung abgearbeitet werden.

Dieser Vorschlag umfasst aber auch die Variante, dass für diese beiden Bearbeitungsaufgaben zwei verschiedene, getrennte Bearbeitungswerkzeuge vorgesehen sind. Für diese ist dann zum Beispiel je ein eigener Werkzeugträger oder auch ein gemeinsamer Werkzeugträger vorgesehen. Mithilfe des/r Werkzeugträger/s sind die Bearbeitungswerkzeuge bewegbar und gesteuert positionierbar.

Des Weiteren ist günstiger Weise vorgesehen, dass Schritt (ii) gleichzeitig an den Verbindungsflächen zweier benachbart positionierter Profilstücke erfolgt, die hernach miteinander zu verschweißen sind. Eine solche Vorgehensweise hat mehrere Vorteile: Die Profilstücke befindet sich bereits im aufgespannten Zustand, wie wenn diese zu verschweißen sind. Sie befinden sich in der richtigen Lage und erfahren durch den Bearbeitungsschritt (ii) gleichzeitig einen Ausgleich der Toleranz, mit den oben angegebenen Effekten.

Da der gespannte Zustand nicht mehr gelöst wird, erfolgt dann, nachdem die genaue Bearbeitung stattgefunden hat, das Verschweißen. Ungenauigkeiten, die zum Beispiel durch ein Umspannen oder Transportieren der toleranzausgeglichenen Profilstäbe erfolgen können, werden so vermieden.

Die Genauigkeit der Maschine insbesondere die Lage der Arbeitsebene, in der zerspanende Bearbeitung erfolgt, ist in der Maschine exakt beherrschbar und führt zu dem gewünschten Bearbeitungsergebnis.

Da beide Verbindungsflächen gleichzeitig bearbeitet werden ist dies auch eine sehr schnelle und effiziente Bearbeitung.

Vorteilhafter Weise ist vorgesehen, dass ein Vorschub der Profilstücke und/oder des Bearbeitungswerkzeuges vorgesehen ist, wobei eine die Profilstücke ausrichtende, bevorzugt bewegliche Vorschubvorrichtung vorgesehen ist.

Die Ausrichtung erfolgt dabei sowohl in Längenposition, wie gegebenenfalls auch nach Winkellage. Beide möglichen Ausrichtungen werden von der Vorschubvorrichtung geleistet.

Des Weiteren ist in dem Vorschlag vorteilhafter Weise vorgesehen, dass das Bearbeitungswerkzeug beweglich, insbesondere linear verschiebbar, angeordnet ist. Insbesondere ist vorgesehen, dass das Bearbeitungswerkzeug in einer Ebene, die parallel zur Arbeitsebene ist, beweglich und gesteuert positionierbar ist.

Bei einer bevorzugten Ausgestaltung des Vorschlags ist vorgesehen, dass das Bearbeitungswerkzeug relativ zu einer Bearbeitungsebene verschiebbar, insbesondere anhebbar, absenkbar oder verschwenkbar angeordnet ist, wobei die Bearbeitungsmaschine eine Führung, insbesondere eine Führungsschiene oder eine Führungsbahn zur Verfügung stellt. Des Weiteren ist auch vorgesehen, dass das Bearbeitungswerkzeug ablenkbar ist, dies gilt insbesondere für die Variante des Vorschlages, bei welchen als Bearbeitungswerkzeug ein Laser- oder Wasserstrahlschneiden vorgesehen ist.

Des Weiteren ist vorgesehen, dass wenigstens ein, insbesondere zwei, bevorzugt vier Bearbeitungswerkzeug(e) vorgesehen ist/sind.

In einer vorteilhaften Ausgestaltung ist vorgesehen, dass eine Steuereinrichtung für die Bewegung des oder der Bearbeitungswerkzeug (e) vorgesehen ist.

Geschickter Weise ist vorgesehen, dass eine synchrone oder versetzte Ansteuerung der Bearbeitungswerkzeuge vorgesehen ist.

In einer weiteren bevorzugten Ausführungsform ist vorgesehen, dass eine dem Bearbeitungswerkzeug zugeordnete Absaugvorrichtung vorgesehen ist.

Vorteilhafter Weise ist vorgesehen, dass das Fräswerkzeug derart ausgebildet ist, dass sich bei Rotation der im Fräswerkzeug vorgesehenen Fräser eine Saugströmung ausbildet, durch die abgehobene Frässpäne von den Profilstücken weggeführt und einer Absaugvorrichtung oder einem den Fräswerkzeug umgebenden Gehäuse zugeführt werden.

Bei einer bevorzugten Ausgestaltung des Vorschlags ist vorgesehen, dass das Fräswerkzeug einen Bürstenring trägt. Der Durchmesser dieses Bürstenringes ist größer wie der Durchmesser des Fräswerkzeug. Geschickter Weise umgibt der Bürstenring das Fräswerkzeug allseitig, wobei die Borsten der Bürste gegenüber der Bearbeitungsebene des Werkzeuges vorstehen. Der Vorteil einer solchen Ausgestaltung liegt darin, dass mit dem Bürstenring eine variable Abdeckung realisiert ist, die vermeidet, dass die abgelösten Späne in der Bearbeitungsmaschine ziellos verteilt werden. Die Borsten des Bürstenringes liegen am Profilstück an und werden bei Bedarf etwas verbogen und ergeben so einen Schutzvorhang. Die abgelösten Späne prallen auf die Innenseite des Bürstenringes, verlieren dort einen Teil, wenn nicht sogar den Großteil ihrer Bewegungsenergie, da diese an den elastischen Borsten abgebremst werden. Sie werden dann von dem einerseits durch das Fräswerkzeug erzeugten Unterdruck oder dem Unterdruck der Absauganlage durch das Bearbeitungswerkzeug hindurch abgesaugt. Gleichzeitig verbessert der Bürstenring auch die Leitung des Unterdruckers, da der Bürstenring für den Luftfluss einen Widerstand darstellt, und der Luftstrom dann mit höherer Geschwindigkeit, an anderer Stelle geführt wird und effektiver ist.

Des Weiteren ist in dem Vorschlag vorteilhafter Weise vorgesehen, dass durch das Bearbeitungswerkzeug Toleranzen bezüglich der Länge der Profilstücke und/oder der Winkellage der Verbindungsflächen ausgeglichen werden.

Bei einer bevorzugten Ausgestaltung des Vorschlags ist vorgesehen, dass dass die Bearbeitungsmaschine auch einen Heizspiegel aufweist. Es ist dabei vorgesehen, dass der Heizspiegel gleichzeitig beide Verbindungsflächen der benachbart angeordneten Profilstücke erwärmt und plastifiziert. Hernach erfolgt das Zusammenfügen, das Verschweißen.

Des Weiteren ist vorgesehen, dass eine mechanische Kopplung der Bewegung von Heizspiegel und Bearbeitungswerkzeug vorgesehen ist. Dies kann zum Beispiel dadurch erreicht werden, dass Heizspiegel und Bearbeitungswerkzeug auf dem gleichen Schlitten angeordnet sind, da an der Verbindungsfläche entweder das Bearbeitungswerkzeug oder der Heizspiegel im Einsatz kommt.

In diesem Zusammenhang wird insbesondere darauf hingewiesen, dass alle im Bezug auf die Bearbeitungsmaschine beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Ansprüche für die Bearbeitungsmaschine berücksichtigt und beansprucht werden und zählen ebenfalls zur Offenbarung.

In der Zeichnung ist die Erfindung insbesondere in einem Ausführungsbeispiel schematisch dargestellt. Es zeigen:
- Fig. 1: in einer schematischen Darstellung das erfindungsgemäße Verfahren
- Fig. 2: eine dreidimensionale Ansicht der erfindungsgemäßen Bearbeitungsmaschine
- Fig. 3a: eine dreidimensionale Ansicht der erfindungsgemäßen Bearbeitungsmaschine in einer ersten Bearbeitungsstellung
- Fig. 3b: eine dreidimensionale Ansicht der erfindungsgemäßen Bearbeitungsmaschine in einer zweiten Bearbeitungsstellung
- Fig. 4: in einer dreidimensionale Ansicht ein Detail der erfindungsgemäßen Bearbeitungsmaschine
- Fig. 5: in einer dreidimensionale Ansicht das Bearbeitungswerkzeug der erfindungsgemäßen Bearbeitungsmaschine
- Fig. 6: in einer Draufsicht ein Detail der erfindungsgemäßen Bearbeitungsmaschine
- Fig. 7: in einer dreidimensionale Ansicht ein Detail der erfindungsgemäßen Bearbeitungsmaschine
- Fig. 8: in einer dreidimensionale Ansicht ein weiteres Ausführungsbeispiel des Bearbeitungswerkzeuges der erfindungsgemäßen Bearbeitungsmaschine
- Fig. 9: in einer schematischen Darstellung ein weiterer Aspekt des erfindungsgemäßen Verfahrens

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen ist sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

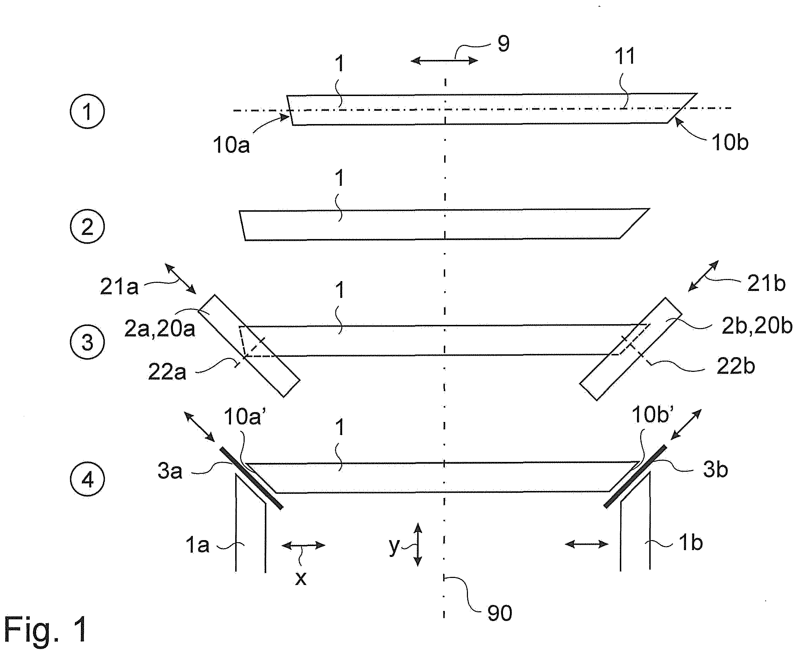

In Figur 1 ist das erfindungsgemäße Verfahren in mehreren Schritten dargestellt, die jeweils die Ziffern 1, 2, 3, und 4 je ein Kreis tragen.

In Schritt 1 wird der Profilstab 1 auf einer Auflage aufgelegt, die sich insbesondere durch eine Mittelachse 90 auszeichnet. Der Profilstab 1 wird durch eine Längsachse 11 beschrieben und weist an seinen jeweiligen Enden Verbindungsflächen 10a und 10b auf, die durch ein Absägen von einer Stangenware gewonnen wurde. In dem hier gezeigten Ausführungsbeispiel soll der/das Profilstab/Profilstück 1 Teil eines rechtwinkligen Rahmens werden. Daher sollten die Verbindungsflächen 10a und 10b einen Gehrungswinkel mit der Längsachse 11 von 45° einschließen was augenfällig die linke Verbindungsfläche 10a nicht aufweist. Auch ist in Schritt 1 der Profilstab 1 bezüglich der Mittelachse 90 nicht mittig ausgerichtet.

In Schritt 2 ist das Profilstück 1 nunmehr bezüglich der Mittelachse 90 zentriert positioniert, was durch eine Zentrier-Positionier-Bewegung 9 erfolgte, die parallel zur Längsachse 11 ist.

In Schritt 3 erfolgt dann eine endseitige Bearbeitung des Profilstückes 1 durch das Bearbeitungswerkzeug 2. Das Bearbeitungswerkzeug 2 ist dabei als Fräswerkzeug 20 ausgebildet, die linke Verbindungsfläche 10a wird dabei durch das Fräswerkzeug 20a bearbeitet, das um eine Rotationsachse 22a rotiert. Das Bearbeitungswerkzeug 2a, 20a ist entlang des Doppelpfeil 21a (in einer Arbeitsebene, die rechtwinklig zur Rahmenebene ist) beweglich und gesteuert positionierbar. Die Arbeitsebene schließt mit der Längsachse 11 den gewünschten Gehrungswinkel von 45° ein. Die Anordnung ist bezüglich der Mittelachse 90 symmetrisch, die rechte Seite trägt die analogen Bezugszeichen, die auf "b" enden.

Durch das Abfräsen der endseitigen Überstände wird die Toleranz ausgeglichen. Es bilden sich neue, bearbeitete Verbindungsfläche 10a' auf der linken Seite und 10b' auf der rechten Seite. Diese Verbindungsflächen 10a' und 10b' weisen jetzt den richtigen Gehrungswinkel und auch eine optimierte, akzeptable Längentoleranz auf.

In Schritt 4 sind die weiteren, rechtwinklig anschließenden Profilstücke 1a und 1b links und rechts angedeutet. Zwischen den jeweiligen Verbindungsflächen, die wie in Schritt 3 beschrieben nacheinander oder gleichzeitig bearbeitet wurden, und jetzt den richtigen Gehrungswinkel aufweisen, befindet sich bereits der Heizspiegel 3a und 3b und es erfolgt dann eine Anstellbewegung der Profilstücke 1, 1a, 1b in bekannter Weise entlang der Achsen X, Y, die in der Rahmenebene liegen. Sind die Profilstücke 1, 1a, 1b ausreichend klassifiziert, werden die Heizspiegel 3a, 3b entfernt und dann die Profilstücke, wie bekannt, gefügt und verschweißt. Das hier gezeigten Ausführungsbeispiel ist eine so genannte 2-Kopf-Maschine analoges ist aber auch in einer so genannten 4-Kopf-Maschine durchführbar.

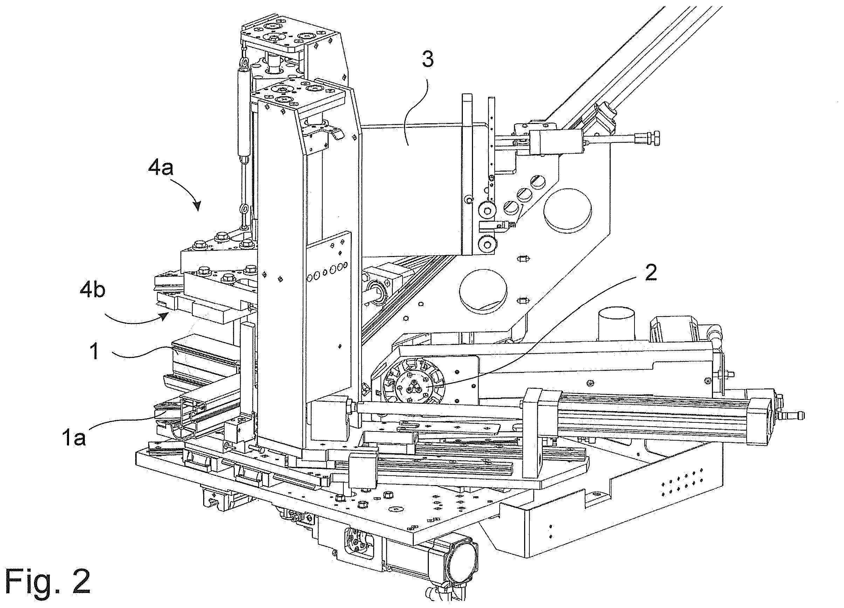

In Figur 2 ist die grundsätzliche Anordnung der Profilstücke 1, 1a an der Bearbeitungsmaschine gezeigt. Der hier gewählte Ausschnitt zeigt einen Bearbeitungskopf der Bearbeitungsmaschine, der eine Spannvorrichtung 4a, 4b für jedes eingelegte Profilstücke 1, 1a aufweist sowie das Bearbeitungswerkzeug 2 und den Heizspiegel 3 die in der Arbeitsebene beweglich, gesteuert positionierbar gelagert und geführt sind.

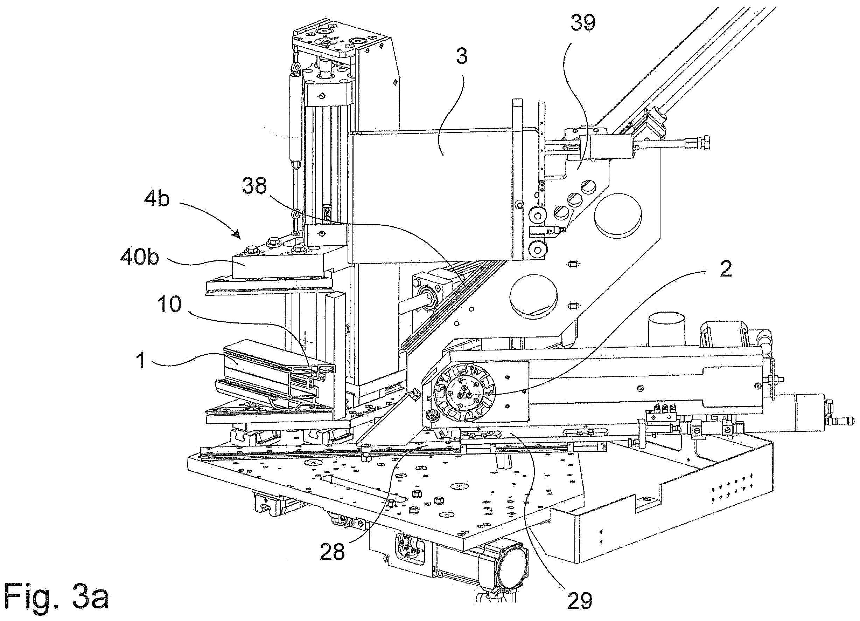

In Figur 3a ist die vordere Spannvorrichtung 4b (nach Figur 2) und das dazugehörige Profilstück 1a zur Erhöhung der Übersichtlichkeit ausgeblendet. Die Verbindungsfläche 10 des Profilstücke 1 ist gut zu erkennen, die Spannplatte 40b ist nach oben versetzt, dass Profilstücke 1 ist hier nicht festgespannt gezeigt.

Für den Heizspiegel 3 ist eine Führungsbahn 38 vorgesehen, die in der Arbeitsebene bzw. hierzu parallel verlaufend ist. Der Heizspiegel 3 besitzt einen Schlitten 39, der auf der Führungsbahn 38 gesteuert positionierbar ist. Hierfür ist natürlich auch ein entsprechender Antrieb vorgesehen. Es ist gut zu erkennen, dass die Führungsbahn 38 mit der Rahmenebene (und der hierzu parallel verlaufenden Bearbeitungsebene der Bearbeitungsmaschine) einen spitzen Winkel einschließt, wodurch eine Zustellungsbewegung des Heizspiegels 3 von schräg oben nach schräg unten erfolgt. Dies ist eine geschickte Anordnung des Heizspiegels 3, da dieser dauerhaft aufgeheizt ist und in dieser Position so von der Verbindungsfläche 10 entfernt ist, und nicht stört.

In einer bevorzugten Ausgestaltung (in Fig. 3a nicht gezeigt) ist vorgesehen, dass der Heizspiegel 3 in der in Figur 3a gezeigten Position in ein Gehäuse oder Abdeckung eintaucht und so vor den vielleicht herumfliegenden Späne, die von den Bearbeitungswerkzeug 2 erzeugt werden, geschützt ist. Dadurch ist zuverlässig vermieden, dass die Späne die Heizfläche des Heizspiegels 3 verunreinigen und so den nachfolgenden Verschweißprozess negativ beeinflussen.

Auch das Bearbeitungswerkzeug 2 besitzt einen Schlitten 29, der auf einer Führungsbahn 28 gesteuert positionierbar ist. Hierzu ist auch ein Antrieb vorgesehen. Auch die Führungsbahn 28 liegt in der Arbeitsebene oder ist hierzu parallel verlaufend. In dem hier gezeigten Ausführungsbeispiel befindet sich das Bearbeitungswerkzeug 2 unterhalb des Heizspiegels 3 und wird parallel zur Rahmenebene (Bearbeitungsebene) bewegt. Die beiden Bewegungen des Heizspiegels 3 und des Bearbeitungswerkzeuges 2 erfolgen unabhängig voneinander oder gekoppelt zum Beispiel auch durch die Steuerung gekoppelt. Sie gelangen so kollisionsfrei in den Spalt zwischen den zu verbindenden Verbindungsflächen.

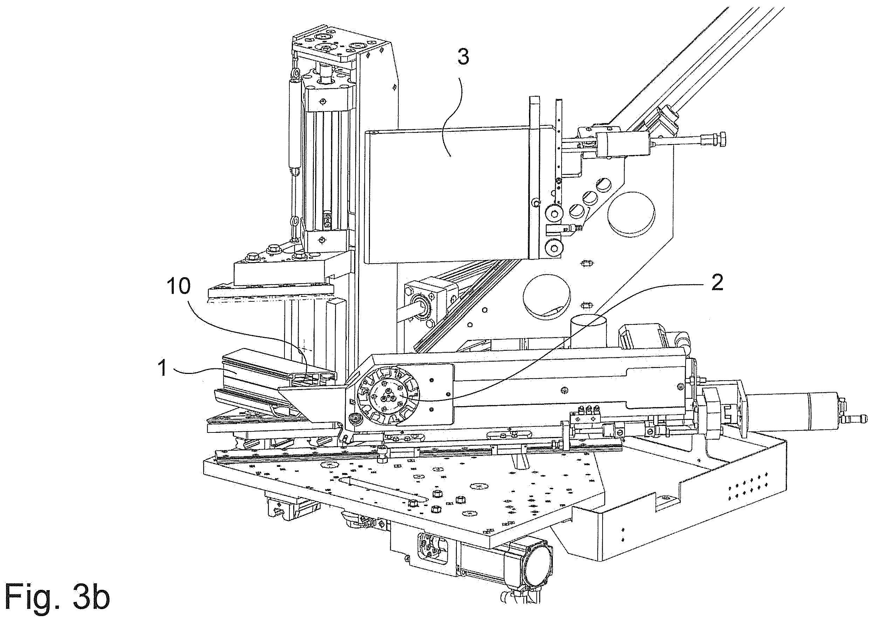

In Figur 3b ist eine andere Stellung des Bearbeitungswerkzeuges 2 gezeigt.

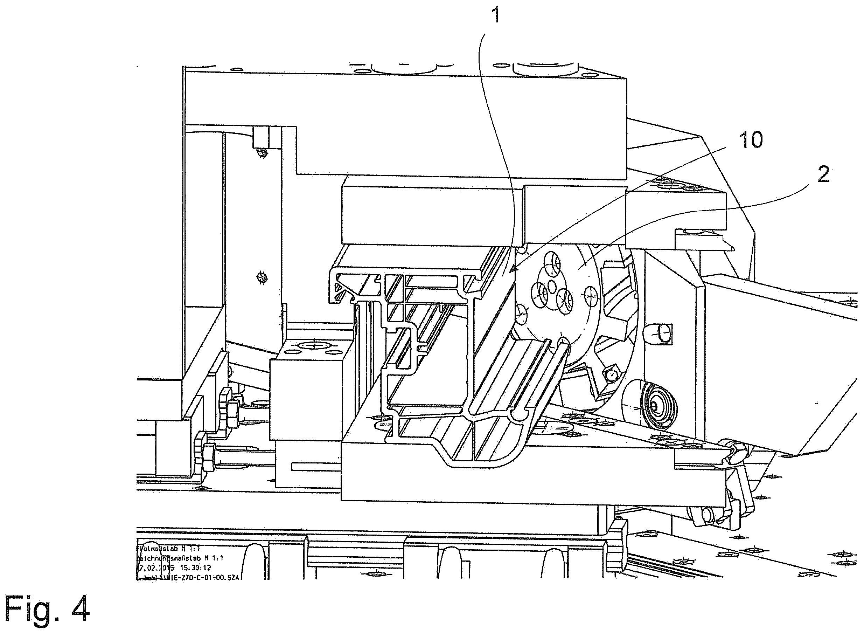

Figur 4 zeigt in einer etwas anderen Blickrichtung ein Detail, wobei das Profilstück 1 hier zur Erhöhung der Übersichtlichkeit verkürzt dargestellt ist. Es ist gut zu sehen, dass das Bearbeitungswerkzeug 2 so weit nach vorne vorgefahren ist, um die Verbindungsfläche 10 zu bearbeiten.

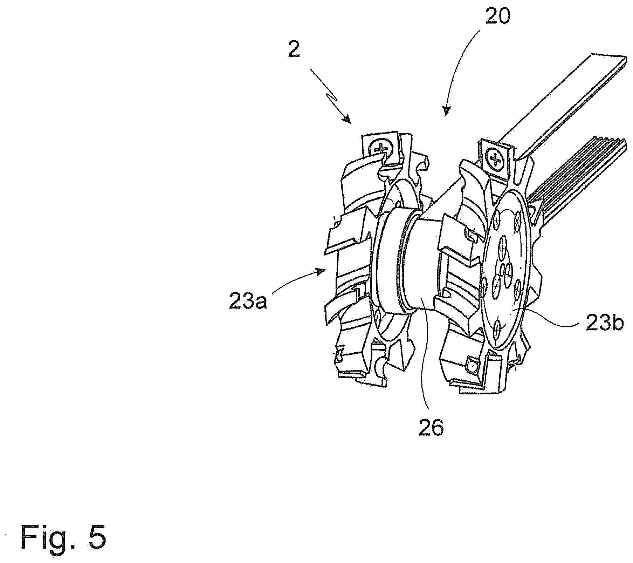

Figur 5 zeigt ein Ausführungsbeispiel des Bearbeitungswerkzeuges 2 nach der Erfindung. Das Bearbeitungswerkzeug 2 ist als Fräswerkzeug 20 ausgebildet, welches aus zwei Frässcheiben 23a und 23b gebildet ist, die symmetrisch, gegensinnig zueinander ausgerichtet sind und als Stirnplanfräser realisiert sind. Die beiden Frässcheiben 23a und 23b werden von einem Distanzstück 26 beabstandet.

Ein Riemenantrieb greift an dem Distanzstück 26 an. Das Fräswerkzeug 2 ist so gestaltet, dass es im Betrieb, also bei Rotation einen Luftstrom erzeugt, der eine geführte Ableitung der erzeugten Späne erlaubt.

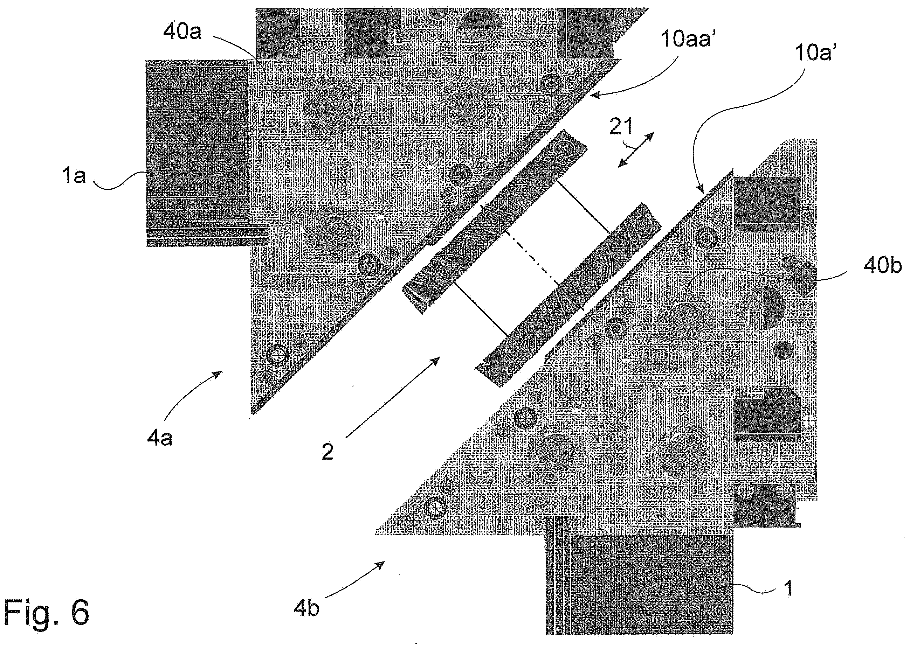

In Figur 6 ist die Bearbeitungssituation des Bearbeitungswerkzeuges 2 zwischen den beiden Profilstücken 1, 1a gezeigt. Die Profilstücke 1, 1a werden je von dreieckigen Spannplatten 40a, 40b der Spannvorrichtungen 4a, 4b gespannt und so fixiert und gehalten. Ein kleiner Bereich der Profilstücke 1, 1a steht endseitige über die Spanplatten 40a, 40b vor und das hier gezeigte Bearbeitungswerkzeug 2 hat die Verbindungsflächen bereits bearbeitet, diese sind mit 10aa' und 10a' gekennzeichnet.

Die Anordnung ist dabei so gewählt, dass das Fräswerkzeug 2 als Doppelfräser gleichzeitig beide Enden der eingelegten Profilstäbe 1, 1a bearbeitet.

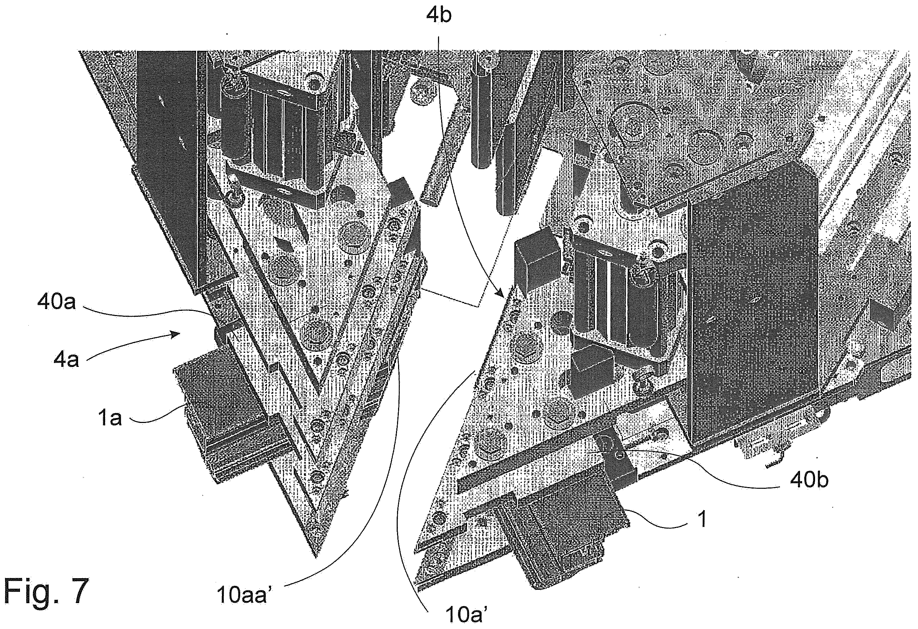

In Figur 7 ist die gleiche Situation wie in Figur 6 gezeigt, nur dass das Bearbeitungswerkzeug 2 ausgeblendet ist.

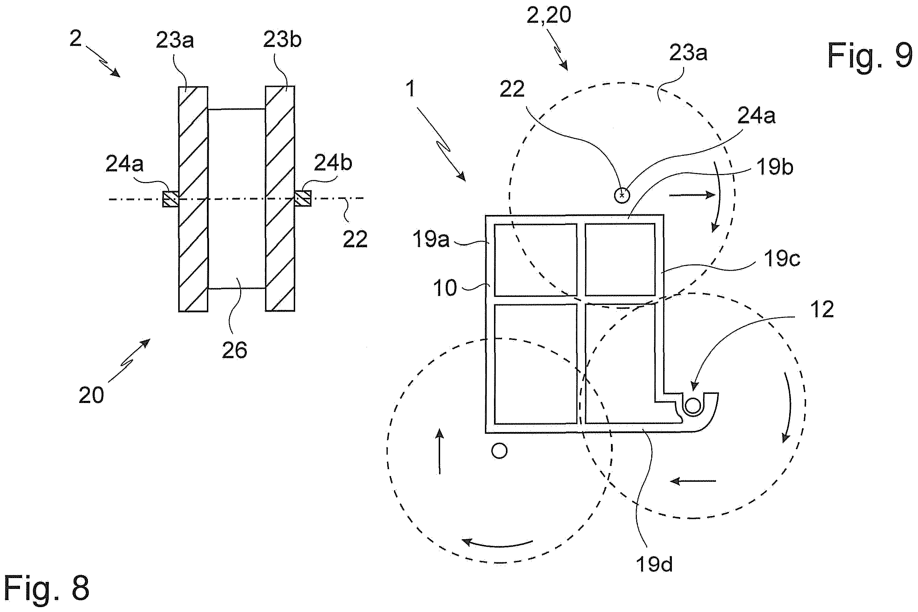

In Figur 8 ist ein weiteres Ausführungsbeispiel des Bearbeitungswerkzeuges 2, einem Fräswerkzeug 20 dargestellt. Der grundsätzliche Aufbau des Fräswerkzeuges 20 ist mit dem nach Figur 5 vergleichbar. Zusätzlich sind auf den Fräserscheiben 23a und 23b konzentrisch, jeweils auf der Außenseite ein kleiner Fingerfräser 24a und 24b angeordnet, der insbesondere für zusätzliche Bearbeitungsaufgaben zum Beispiel in einer Aufnahmenut 12 des Profilstabes 1 eingesetzt wird, Wie dies zum Beispiel in Figur 9 dargestellt ist.

Dies ist auch gleichzeitig ein Beispiel für das nur teilflächige Abfräsen oder Abtragen von Material an der Verbindungsfläche 10. Das in Figur 9 eingesetzte Bearbeitungswerkzeug 2 entspricht dem in Figur 8 gezeigten und beschriebenem. Das Bearbeitungswerkzeug 2 wird so geführt, dass der mittige Fingerfräser 24 nur an bestimmten Orten das Profilstück 1 bearbeitet, nämlich in der Aufnahmenut 12 oder nur der außenliegenden Wände 19a, 19b, 19c, 19d des Profilstabes 1. Daher kann das Fräswerkzeug 20, Bearbeitungswerkzeug 2 die Verbindungsfläche 10 des Profilstückes 1 nicht vollflächig überstreichen, sondern nur teilweise, was zu einer Kreisbewegung oder U-artigen Bewegung des Bearbeitungswerkzeuges 2 führt. Daher ist es günstig, dass das Bearbeitungswerkzeug 2, 20 in der Bearbeitungsebene zumindest in zwei Dimensionen beweg- und positionierbar ist. Des weiteren ist auch ein Ablauf vorstellbar, bei welchen zunächst mit dem Scheibenfräser 23a, 23b die Verbindungsfläche welche 10 bearbeitet wird und hernach dann der Fingerfräser 24a, 24b eingesetzt wird Geschickter Weise muss hierzu kein Umspannen des Werkstückes Profilstücke vorgenommen werden.

## Patentansprüche

1. Verfahren zum Verbinden von in einem Winkel aufeinanderstoßende Profilstücke (1), insbesondere Kunststoff-Profilstücke, zu einemgeschweißten Rahmen oder Teilrahmen, insbesondere eines Fenster- oder Türrahmens, umfassend die Schritte in angegebener Reihenfolge:
(i) Aufspannen der Profilstücke (1),
(ii) Ausgleich von mindestens einer Toleranz in mindestens einer sich senkrecht zu einer Rahmenebene erstreckenden Verbindungsfläche der Profilstücke durch ein Abtrennen von Profilmaterial im Bereich der Verbindungsflächen (10) mit wenigstens einem Bearbeitungswerkzeug (2),
(iii) Anschmelzen der Verbindungsflächen (10) und Kontaktieren der angeschmolzenen Verbindungsflächen (10) zur Ausbildung einer Schweißverbindung
**dadurch gekennzeichnet, dass** als Bearbeitungswerkzeug (2) ein Fräswerkzeug vorgesehen ist,
welches aus zwei Frässcheiben (23a) und (23b) gebildet ist, die symmetrisch, gegensinnig zueinander ausgerichtet sind und als Stirnplanfräser realisiert sind,
wobei die beiden Frässcheiben (23a) und (23b) von einem Distanzstück (26) beabstandet sind,
wobei das Fräswerkzeug (2) als Doppelfräser ausgeführt ist und gleichzeitig beide Enden von zwei eingelegten Profilstücken (1, 1a) bearbeitet,
wobei ein Riemenantrieb an dem Distanzstück 26 angreift.

2. Verfahren nach Anspruch 1, **dadurch gekennzeichnet, dass** eine Längenmessung zur Ermittlung der Längentoleranz der Profilstücke (1) vor oder nach dem Aufspannen zur Ermittlung eines IST-Wertes für die Länge erfolgt.

3. Verfahren nach Anspruch 2, **dadurch gekennzeichnet, dass** ein Vergleich des Messergebnisses mit einem SOLL-Wert erfolgt und bei Über-oder Unterschreiten eines Toleranzbereiches ein/e - Abbrechen des Ablaufes, - Informationsausgabe an einer Anzeige - Eingabeaufforderung an den Bediener und/oder - Verwerfen des Profilstückes (1) erfolgt.

4. Verfahren nach einem der vorhergehenden Ansprüche, **dadurch gekennzeichnet, dass** eine Bestimmung der Winkellage der Verbindungsflächen (10) relativ zu der Rahmenebene und ein Ausgleich von Toleranzen durch Bearbeiten der Verbindungsflächen (10) mit dem wenigstens einem Bearbeitungswerkzeug (2) erfolgt.

5. Verfahren nach einem der vorhergehenden Ansprüche, **dadurch gekennzeichnet, dass** der Schritt (ii) unmittelbar vor Schritt (iii) erfolgt, insbesondere kein Umspannen der Profilstücke zwischen Schritt (ii) und Schritt (iii) vorgesehen ist und/oder Schritt (ii) mehrfach, insbesondere bis zum Erreichen des wenigstens einen SOLL-Wertes innerhalb der Längentoleranz durchgeführt wird.

6. Verfahren nach einem der vorhergehenden Ansprüche, **dadurch gekennzeichnet, dass** ein voll- oder nur teilflächiges Abtrennen der Verbindungsfläche/n (10) vorgesehen ist oder nur an den außenliegenden Profilbereichen, insbesondere die das Profil begrenzenden Profilstege, ein Abtrennen der Verbindungsfläche/n (10) vorgesehen ist.

7. Verfahren nach einem der vorhergehenden Ansprüche, **dadurch gekennzeichnet, dass** in oder vor Schritt (ii) eine Ausrichtung der Position der Profilstücke (1) zueinander durchgeführt wird und/oder in oder vor Schritt (ii) eine ein deckungsgleiches Fügen der Stirnflächen zulassende Ausrichtung der Profilstücke (1) durchgeführt wird.

8. Verfahren nach einem der vorhergehenden Ansprüche, **dadurch gekennzeichnet, dass** das Abtrennen von Profilmaterial durch ein Späne erzeugenden Bearbeitungswerkzeug (2), wie einer Säge oder einen Fräse oder durch ein Abtrennen von Profilmaterial durch ein Laser- oder Wasserstrahlschneiden als Bearbeitungswerkzeug erfolgt und/oder ein Verschieben des Bearbeitungswerkzeuges entlang einer relativ zur Bearbeitungsebene parallel, senkrecht oder geneigt ausgerichteten Achse erfolgt.

9. Verfahren nach einem der vorhergehenden Ansprüche, **dadurch gekennzeichnet, dass** in Schritt (iii) das Heranführen eines Heizspiegels(3) an die Verbindungsflächen (10) durch Verschieben des Heizspiegels (3) entlang einer zur Bearbeitungsebene parallel, senkrecht oder geneigt ausgerichteten Achse erfolgt und/oder die Schritte (ii) und (iii) in gesonderten Vorrichtungen und/oder räumlich getrennt durchgeführt werden, insbesondere um Kontaminationen des Schweißvorganges mit abgehobenen Spänen zu minimieren.

10. Verfahren nach einem der vorhergehenden Ansprüche, **dadurch gekennzeichnet, dass** bei Festlegung und Ausgleich der Längentoleranzen die abgetragene Materialmenge derart gewählt ist, dass bei höchstmöglicher Stabilität der Schweißverbindung ein geringstmöglicher Abbrand erreicht wird und eine Ausbildung einer insbesondere sichtbaren Schweißwulst an den Verbindungsflächen bzw. in der Rahmenebene vermieden oder minimiert wird.

11. Verfahren nach einem der vorhergehenden Ansprüche, **dadurch gekennzeichnet, dass** eine Absaugung des abgetrennten Profilmaterials, z.B. Späne vorgesehen ist, wobei die Absaugung insbesondere über oder durch das Bearbeitungswerkzeug (2) erfolgt.

12. Verfahren nach einem der vorhergehenden Ansprüche, **dadurch gekennzeichnet, dass** vor oder nach Schritt (ii) eine Aufnahmenut (12) des Profilstückes (1) mit einem späneerzeugenden Bearbeitungswerkzeug (2) bearbeitet wird und/oder Schritt (ii) gleichzeitig an den Verbindungsflächen zweier benachbart positionierter Profilstücke (1) erfolgt, die hernach miteinander zu verschweißen sind.

13. Bearbeitungsmaschine zum Verbinden von in einem Winkel aufeinanderstoßenden Profilstücken (1), insbesondere Kunststoff-Profilstücke zu geschweißten Rahmen oder Teilrahmen, insbesondere Fenster- oder Türrahmen, wobei ein Profilmaterial abtrennendes Bearbeitungswerkzeug(2) vorgesehen ist, das wenigstens eine zu einer Verbindungsfläche (10) parallel ausgerichtete Bearbeitungsfläche aufweist und für ein mindestens teilflächiges, insbesondere vollflächiges Abtrennen von Profilmaterial an der Verbindungsfläche (10) vorgesehen ist, **dadurch gekennzeichnet, dass** als Bearbeitungswerkzeug (2) ein Fräswerkzeug vorgesehen ist, welches aus zwei Frässcheiben (23a) und (23b) gebildet ist, die symmetrisch, gegensinnig zueinander ausgerichtet sind und als Stirnplanfräser realisiert sind, wobei die beiden Frässcheiben (23a) und (23b) von einem Distanzstück (26) beabstandet sind, wobei das Fräswerkzeug (2) als Doppelfräser ausgeführt ist und gleichzeitig beide Enden von zwei eingelegten Profilstücken (1, 1a) bearbeiten kann, wobei ein Riemenantrieb an dem Distanzstück 26 angreift, und die Bearbeitungsmaschine zur Durchführung des Verfahrens gemäß einem der vorhergehenden Ansprüche ausgebildet ist.

14. Bearbeitungsmaschine nach Anspruch 13, **dadurch gekennzeichnet, dass** das Bearbeitungswerkzeug (2) relativ zu einer Bearbeitungsebene verschiebbar, insbesondere anhebbar, absenkbar, verschwenkbar oder ablenkbar angeordnet ist, wobei die Bearbeitungsmaschine eine Führung, insbesondere eine Führungsschiene oder eine Führungsbahn zur Verfügung stellt und/oder eine dem Bearbeitungswerkzeug (2) zugeordnete Absaugvorrichtung vorgesehen ist und/oder dass die Bearbeitungsmaschine auch einen Heizspiegel (3) zum Verbinden der Profilstücke (1) aufweist.

15. Bearbeitungsmaschine nach einem der Ansprüche 13 bis 14, **dadurch gekennzeichnet, dass** das Fräswerkzeug einen Bürstenring trägt.

## Claims

1. Method for joining profile pieces (1), in particular plastic profile pieces, which abut one another at an angle, to form a welded frame or partial frame, in particular a window or door frame, comprising the steps in the specified sequence:
(i) Clamping the profile sections (1),
(ii) Compensation of at least one tolerance in at least one connecting surface of the profile pieces extending perpendicular to a frame plane by cutting off profile material in the region of the connecting surfaces (10) using at least one machining tool (2),
(iii) Melting the connecting surfaces (10) and contacting the melted connecting surfaces (10) to form a welded joint
**characterised in that** a milling tool is provided as the machining tool (2),
which is formed from two milling discs (23a) and (23b), which are aligned symmetrically in opposite directions to one another and are implemented as face milling cutters,
wherein the two milling discs (23a) and (23b) are spaced apart by a spacer (26),
wherein the milling tool (2) is designed as a double milling cutter and simultaneously machines
both ends of two inserted profile pieces (1, 1a), wherein a belt drive engages on the spacer 26.

2. Method according to claim 1, **characterised in that** a length measurement to determine the length tolerance of the profiled pieces (1) is carried out before or after clamping to determine an actual value for the length.

3. Method according to claim 2, **characterised in that** the measurement result is compared with a target value and, if a tolerance range is exceeded or undershot, the process is - aborted, - information is output to a display, - the operator is prompted to make an entry and/or - the profile section (1) is discarded.

4. Method according to one of the preceding claims, **characterised in that** the angular position of the connecting surfaces (10) relative to the frame plane is determined and tolerances are compensated for by machining the connecting surfaces (10) with the at least one machining tool (2).

5. Method according to one of the preceding claims, **characterised in that** step (ii) is carried out immediately before step (iii), in particular no reclamping of the profiled pieces is provided between step (ii) and step (iii) and/or step (ii) is carried out several times, in particular until the at least one target value within the length tolerance is reached.

6. Method according to one of the preceding claims, **characterised in that** full or only partial separation of the connecting surface(s) (10) is provided or separation of the connecting surface(s) (10) is only provided on the outer profile areas, in particular the profile webs delimiting the profile.

7. Method according to one of the preceding claims, **characterised in that** in or before step (ii) an alignment of the position of the profile pieces (1) relative to one another is carried out and/or in or before step (ii) an alignment of the profile pieces (1) permitting a congruent joining of the end faces is carried out.

8. Method according to one of the preceding claims, **characterised in that** the cutting off of profile material is carried out by a chip-producing machining tool (2), such as a saw or a milling cutter, or by a cutting off of profile material by a laser or water jet cutting as a machining tool and/or a displacement of the machining tool along an axis aligned parallel, perpendicular or inclined relative to the machining plane.

9. Method according to one of the preceding claims, **characterised in that** in step (iii) a heating mirror (3) is brought to the joint surfaces (10) by displacing the heating mirror (3) along an axis aligned parallel, perpendicular or inclined to the machining plane and/or steps (ii) and (iii) are carried out in separate devices and/or spatially separated, in particular in order to minimise contamination of the welding process with removed chips.

10. Method according to one of the preceding claims, **characterised in that,** when determining and compensating for the length tolerances, the amount of material removed is selected in such a way that, with the highest possible stability of the welded joint, the lowest possible burn-off is achieved and the formation of a weld bead, in particular a visible weld bead, on the joint surfaces or in the frame plane is avoided or minimised.

11. Method according to one of the preceding claims, **characterised in that** an extraction of the separated profile material, e.g. chips, is provided, the extraction taking place in particular via or through the processing tool (2).

12. Method according to one of the preceding claims, **characterised in that** before or after step (ii), a receiving groove (12) of the profiled piece (1) is machined with a chip-generating machining tool (2) and/or step (ii) is carried out simultaneously on the connecting surfaces of two adjacently positioned profiled pieces (1), which are then to be welded together.

13. Processing machine for connecting profile pieces (1), in particular plastic profile pieces, which abut one another at an angle, to form welded frames or partial frames, in particular window or door frames, wherein a processing tool (2) is provided which separates off profile material, has at least one processing surface aligned parallel to a connecting surface (10) and is provided for at least partial, in particular full-surface, separation of profile material at the connecting surface (10), **characterised in that** a milling tool is provided as the processing tool (2), which is formed from two milling discs (23a) and (23b), which are aligned symmetrically in opposite directions to one another and are realised as face milling cutters, wherein the two milling discs (23a) and (23b) are spaced apart by a spacer (26), wherein the milling tool (2) is designed as a double milling cutter and can simultaneously machine both ends of two inserted profile pieces (1, 1a), wherein a belt drive engages on the spacer 26, and the processing machine is designed to carry out the method according to one of the preceding claims.

14. Processing machine according to claim 13, **characterised in that** the processing tool (2) is arranged to be displaceable relative to a processing plane, in particular to be raisable, lowerable, pivotable or deflectable, wherein the processing machine provides a guide, in particular a guide rail or a guide track and/or a suction device associated with the processing tool (2) is provided and/or **in that** the processing machine also has a heating level (3) for connecting the profiled pieces (1).

15. Processing machine according to one of claims 13 to 14, **characterised in that** the milling tool carries a brush ring.

## Revendications

1. Procédé pour assembler des pièces profilées (1), en particulier des pièces profilées en matière plastique, qui se rejoignent selon un angle, pour former un cadre ou un cadre partiel soudé, en particulier un cadre de fenêtre ou de porte, comprenant les étapes dans l'ordre indiqué :
(i) Fixer les pièces profilées (1),
(ii) compensation d'au moins une tolérance dans au moins une surface de liaison des pièces profilées s'étendant perpendiculairement à un plan du cadre par une séparation du matériau profilé dans la zone des surfaces de liaison (10) avec au moins un outil d'usinage (2),
(iii) fusion des surfaces de liaison (10) et mise en contact des surfaces de liaison fondues (10) pour former une liaison soudée
**caractérisé en ce qu'**il est prévu comme outil d'usinage (2) un outil de fraisage qui est formé de deux disques de fraisage (23a) et (23b) qui sont symétriques, orientés en sens inverse l'un par rapport à l'autre et sont réalisés sous forme de fraises à plan frontal,
les deux disques de fraisage (23a) et (23b) étant espacés
par une pièce d'écartement (26),
l'outil de fraisage (2) étant réalisé sous la forme d'une fraise double et usinant simultanément les deux extrémités de deux pièces profilées (1, 1a) insérées, un entraînement par courroie étant en prise avec la pièce d'écartement 26.

2. Procédé selon la revendication 1, **caractérisé en ce qu'**une mesure de longueur pour déterminer la tolérance de longueur des pièces profilées (1) est effectuée avant ou après le serrage pour déterminer une valeur réelle pour la longueur.

3. Procédé selon la revendication 2, **caractérisé en ce qu'**une comparaison du résultat de mesure avec une valeur de consigne est effectuée et, en cas de dépassement vers le haut ou vers le bas d'une plage de tolérance, une/des - interruption(s) du déroulement, - émission d'informations sur un affichage - demande de saisie à l'opérateur et/ou - rejet de la pièce profilée (1).

4. Procédé selon l'une des revendications précédentes, **caractérisé en ce qu'**une détermination de la position angulaire des surfaces de liaison (10) par rapport au plan du cadre et une compensation des tolérances sont effectuées en usinant les surfaces de liaison (10) avec ledit au moins un outil d'usinage (2).

5. Procédé selon l'une des revendications précédentes, **caractérisé en ce que** l'étape (ii) est effectuée immédiatement avant l'étape (iii), en particulier aucun changement de serrage des pièces profilées n'est prévu entre l'étape (ii) et l'étape (iii) et/ou l'étape (ii) est effectuée plusieurs fois, en particulier jusqu'à l'obtention d'au moins une valeur de consigne à l'intérieur de la tolérance de longueur.

6. Procédé selon l'une des revendications précédentes, **caractérisé en ce qu'**il est prévu une séparation sur toute la surface ou seulement sur une partie de la/des surface(s) de liaison (10) ou qu'il est prévu une séparation de la/des surface(s) de liaison (10) uniquement sur les zones de profilé situées à l'extérieur, en particulier sur les nervures de profilé délimitant le profilé.

7. Procédé selon l'une des revendications précédentes, **caractérisé en ce que,** dans ou avant l'étape (ii), on réalise un alignement de la position des pièces profilées (1) les unes par rapport aux autres et/ou, dans ou avant l'étape (ii), on réalise un alignement des pièces profilées (1) permettant un assemblage en coïncidence des surfaces frontales.

8. Procédé selon l'une des revendications précédentes, **caractérisé en ce que** la séparation du matériau profilé est effectuée par un outil d'usinage (2) produisant des copeaux, comme une scie ou une fraise, ou par une séparation du matériau profilé par une découpe au laser ou au jet d'eau en tant qu'outil d'usinage et/ou un déplacement de l'outil d'usinage est effectué le long d'un axe orienté parallèlement, perpendiculairement ou incliné par rapport au plan d'usinage.

9. Procédé selon l'une des revendications précédentes, **caractérisé en ce que,** à l'étape (iii), le rapprochement d'un miroir chauffant (3) des surfaces de liaison (10) est effectué par déplacement du miroir chauffant (3) le long d'un axe orienté parallèlement, perpendiculairement ou de manière inclinée par rapport au plan d'usinage et/ou les étapes (ii) et (iii) sont effectuées dans des dispositifs séparés et/ou sont séparées dans l'espace, en particulier pour minimiser les contaminations du processus de soudage par des copeaux soulevés.

10. Procédé selon l'une des revendications précédentes, **caractérisé en ce que,** lors de la détermination et de la compensation des tolérances de longueur, la quantité de matériau enlevée est choisie de telle sorte que, pour une stabilité maximale possible de l'assemblage soudé, on obtienne une usure la plus faible possible et qu'on évite ou minimise la formation d'un bourrelet de soudure, en particulier visible, sur les surfaces d'assemblage ou dans le plan du cadre.

11. Procédé selon l'une des revendications précédentes, **caractérisé en ce qu'**il est prévu une aspiration du matériau profilé séparé, par exemple des copeaux, l'aspiration étant notamment réalisée au-dessus ou à travers l'outil d'usinage (2).

12. Procédé selon l'une des revendications précédentes, **caractérisé en ce qu'**avant ou après l'étape (ii), une rainure de réception (12) du morceau de profilé (1) est usinée avec un outil d'usinage (2) produisant des copeaux et/ou l'étape (ii) est effectuée simultanément sur les surfaces de liaison de deux morceaux de profilé (1) positionnés de manière adjacente, qui doivent ensuite être soudés ensemble.

13. Machine d'usinage pour l'assemblage de pièces profilées (1) se rejoignant sous un angle, en particulier de pièces profilées en matière plastique pour former des cadres ou des cadres partiels soudés, en particulier des cadres de fenêtres ou de portes, un outil d'usinage (2) séparant le matériau profilé étant prévu, lequel présente au moins une surface d'usinage orientée parallèlement à une surface d'assemblage (10) et est prévu pour une séparation au moins partielle, en particulier totale, du matériau profilé sur la surface d'assemblage (10), **caractérisée en ce qu'**il est prévu comme outil d'usinage (2) un outil de fraisage, qui est formé de deux disques de fraisage (23a) et (23b) qui sont symétriques, orientés en sens inverse l'un par rapport à l'autre et réalisés sous forme de fraises à plan frontal, les deux disques de fraisage (23a) et (23b) étant espacés par une pièce d'écartement (26), l'outil de fraisage (2) étant réalisé sous la forme d'une fraise double et pouvant usiner simultanément les deux extrémités de deux pièces profilées (1, 1a) insérées, un entraînement par courroie étant en prise avec la pièce d'écartement 26, et la machine d'usinage étant conçue pour mettre en oeuvre le procédé selon l'une des revendications précédentes.

14. Machine d'usinage selon la revendication 13, **caractérisée en ce que** l'outil d'usinage (2) est disposé de manière à pouvoir être déplacé par rapport à un plan d'usinage, en particulier à pouvoir être soulevé, abaissé, pivoté ou dévié, la machine d'usinage mettant à disposition un guidage, en particulier un rail de guidage ou une voie de guidage et/ou un dispositif d'aspiration associé à l'outil d'usinage (2) étant prévu et/ou **en ce que** la machine d'usinage présente également un miroir chauffant (3) pour l'assemblage des pièces profilées (1).

15. Machine d'usinage selon l'une des revendications 13 à 14, **caractérisée en ce que** l'outil de fraisage porte une bague-brosse.
